# EUROPEAN PATENT APPLICATION

(11) **EP 3 753 807 A1**
(43) Date of publication of application: **23.12.2020**
(21) Application number: 19180642.1
(22) Date of filing: 17.06.2019
(51) Int. Cl.: B62D 5/04, B62D 6/02, B62D 6/00

(54) **IMPROVED CONTROL OF ELECTRICAL POWER STEERING**

(71) Applicant: Volvo Car Corporation, 40531 Göteborg (SE)
(72) Inventor: HÄLL, Carl-Johan, SE-416 71 GÖTEBORG (SE)
(74) Representative: Kransell & Wennborg KB

(57) **Abstract**

The disclosed subject matter generally relates to electrically powered steering assistance systems for a front axle (106) of a vehicle (100). With the herein proposed electrically powered steering assistance system and method, the degree of steering assistance is adjusted based on a present vehicle acceleration magnitude, and thus indirectly based on the forces on the front axle (106). In this way, may the steering feel experienced by the driver be maintained at or close to a nominal steering feel even when accelerating or decelerating with the vehicle (100). The above advantages are obtained by a method including receiving a signal indicative of a present vehicle acceleration magnitude (S). A present degree of steering assistance provided by the electrically powered steering assistance system to the front axle (106) of the vehicle (100) is determined. The present degree of steering assistance is adjusted by an adjustment factor (K) based on the present vehicle acceleration magnitude.

(Fig. 1)

## Description

### TECHNICAL FIELD

The present disclosure generally relates to a method for controlling an electrically powered steering assistance system for a front axle of a vehicle, and to a corresponding electrically powered steering assistance system.

### BACKGROUND

Vehicles are most commonly equipped with power assisted steering which provides for the driver to turn the steering wheel with less effort. Power assisted steering systems were for a long time dominated by hydraulic system. More recently have electric power assisted steering emerged into the market. Electric power assisted steering systems employs an electric motor to provide the assisting force.

Electric power assisted steering systems provides a promising approach for steering assist with a more compact and fuel-efficient solution compared to the hydraulic systems. Generally, an electric power assisted steering system includes sensors for detecting the operation of the steering wheel and a processor for calculating the required assisting torque to be applied. The assisting torque may for example be applied to the steering column or a steering rack of the vehicle using an electric motor controlled by the processor.

However, there is still room for improvements with regards to adjusting the assisting torque depending on different driving circumstances to improve the steering characteristics provided by electric power assisted steering systems.

### SUMMARY

The disclosed subject matter generally relates to a method for controlling an electrically powered steering assistance system for a front axle of a vehicle.

The inventors realized that when accelerating with a vehicle with sufficiently large acceleration causes the front axle of the vehicle to lift or be pushed down depending on the direction of the acceleration. For example, a large positive acceleration causes the front axle to lift and a large negative acceleration, i.e. during braking, causes the front axle to be pushed towards the ground. This vertical motion of the front axle causes a variation in the forces on the front axle and consequently also the contact forces between the vehicle tyres and the ground. The variation in contact force affects the steering feel experienced by the driver as assisted by prior art steering assist systems.

With the herein proposed electrically powered steering assistance system and method, the degree of steering assistance is adjusted based on a present vehicle acceleration magnitude, and thereby also adjusted indirectly based on the forces on the front axle. In this way, may the steering feel experienced by the driver be maintained at or close to a nominal steering feel even when the vehicle is accelerating or decelerating.

The above advantages are obtained by a method including receiving a signal indicative of a present vehicle acceleration magnitude. A present degree of steering assistance provided by the electrically powered steering assistance system to the front axle of the vehicle is determined. The present degree of steering assistance is adjusted by an adjustment factor based on the present vehicle acceleration magnitude.

In embodiments, evaluating the present degree of steering assistance in relation to the present vehicle acceleration magnitude, wherein the adjustment factor may be determined based on the relation between the present degree of steering assistance and the present vehicle acceleration magnitude.

Adjusting the present degree of steering assistance by an adjustment factor may advantageously be a scaling of the present degree of steering assistance by the adjustment factor.

The inventors also propose an electrically powered steering assistance system for a front axle of a vehicle, the system comprising: an electric motor connectable to a steering rack of a front axle of a vehicle for providing an assist steering torque to front wheels of the front axle, and a control unit configured to control the electric motor to provide variable degree of steering assist torque depending on a present vehicle acceleration magnitude.

The electric motor is directly or indirectly connectable to the steering rack.

Further features of, and advantages with, embodiments of the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF DRAWINGS

These and other aspects of the disclosed subject matter will now be described in more detail, with reference to the appended drawings showing example embodiments of the present disclosure, wherein:
FIG. 1 conceptually illustrates a vehicle experiencing a longitudinal acceleration;
FIG. 2 is a flow-chart of method steps according to embodiments of the present disclosure;
FIG. 3 is a flow-chart of method steps according to embodiments of the present disclosure;
FIG. 4 conceptually illustrates a electrically powered steering assistance system for a front axle of a vehicle according to embodiments of the present disclosure; and
FIG. 5 is a functional box diagram conceptually illustrating embodiments of the present disclosure.

### DETAILED DESCRIPTION

In the present detailed description, various embodiments of a method and a system according to the present disclosure are described. However, embodiments of the present disclosure may be embodied in many different forms and should not be construed as limited to the embodiments set forth herein; rather, these embodiments are provided for thoroughness and completeness, and to fully convey the scope of the disclosure to the skilled person. In some instances, well known structures and devices are shown in block diagram form in order to avoid obscuring the novelty of the exemplary embodiments presented herein. Like reference characters refer to like elements throughout.

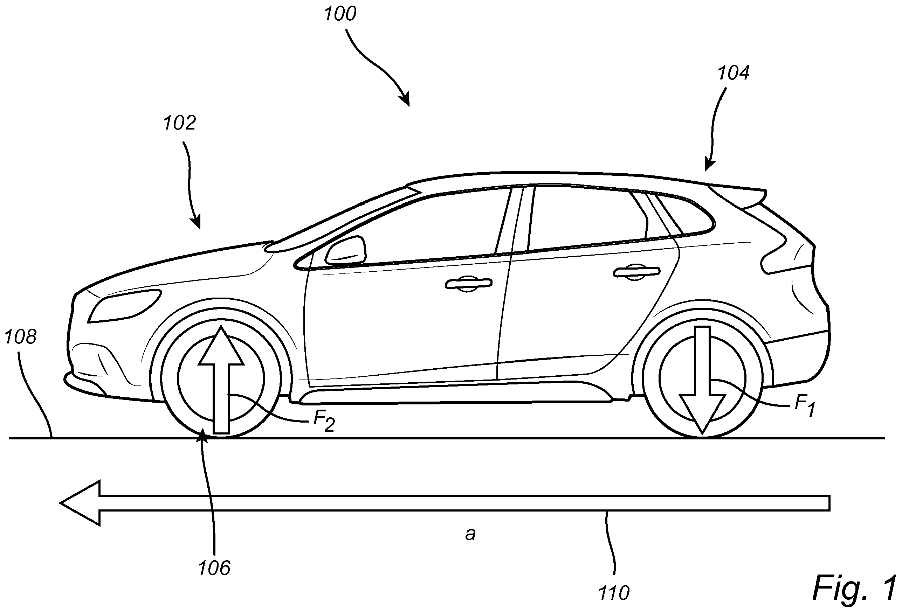

Fig. 1 illustrates a vehicle 100 including a front part 102 and a rear part 104. The vehicle 100 comprises an electrical power assisted steering system configured to provide assisting torque to a front axle of the vehicle 100. The assisting torque is applied for assisting a driver of the vehicle in turning the front wheels 106 (only one front wheel is shown) of the vehicle. The torque required for turning the front wheels 106 depends on for example the vehicle speed and the force between the wheels 106 and the ground 108. Generally, as will be described, the electrical power assisted steering system is configured to maintain the steering torque required for the driver at a nominal steering torque, i.e. at or near a set point steering torque.

Fig. 1 conceptually illustrates the vehicle 100 as it accelerates with a positive longitudinal acceleration *a* as indicated by the arrow 110. A longitudinal acceleration of the vehicle is along the driving direction of the vehicle 100, either as a positive acceleration in the direction indicated by the arrow 110 defined as an increase in speed, or as a negative acceleration defined as a reduction in speed, i.e. in an opposite direction of the arrow 110.

When the vehicle is accelerated in a forward direction 110 with the acceleration *a* the force on the front part 102 of the vehicle may be altered. This is caused by the rear axle drive pushing the rear axle down when accelerating the vehicle 100. As illustrated in fig. 1, when the vehicle is accelerating with the acceleration *a* at least partly by the rear axle drive, the rear part 104 of the vehicle is pushed down by force *F₁,* while at the same time the force *F₂* on the front axle at the front part 102 leads to reduced contact area and contact force between the front wheels 106 and the ground 108. With prior art system, this leads to a steering assistance which does not match the nominal steering feel, i.e. the steering feel may be experienced as lighter by the driver, which may lead to too sensitive steering and an unstable feeling for the driver. The present disclosure aims to mitigate this effect.

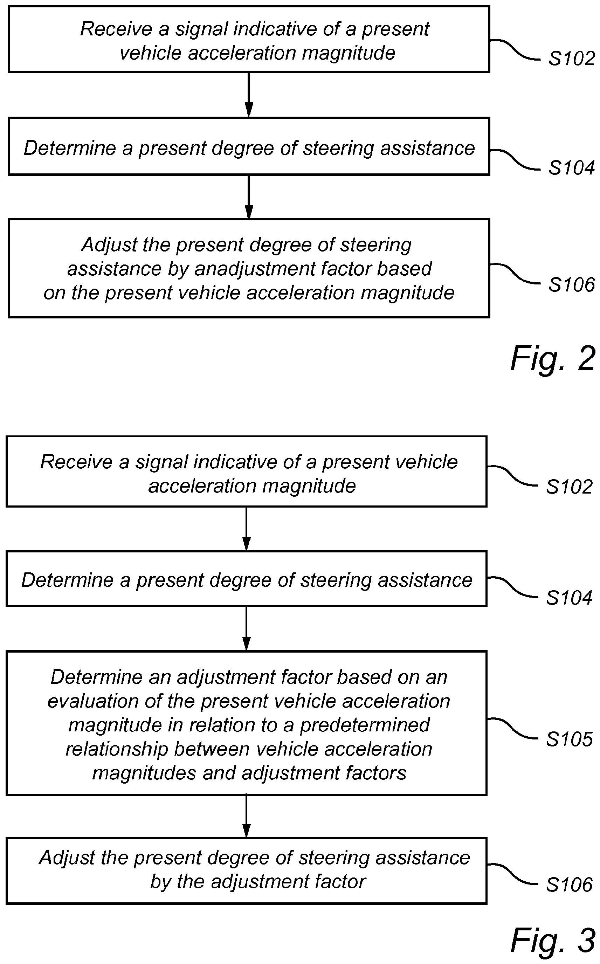

Fig. 2 is a flow-chart of method steps according to example embodiments of the present disclosure. The method comprisies a step S102 of receiving a signal indicative of a present vehicle acceleration magnitude. Step S104 includes determining a present degree of steering assistance provided by the electrically powered steering assistance system to the front axle of the vehicle. In subsequent step S106, adjusting the present degree of steering assistance by an adjustment factor based on the present vehicle acceleration magnitude.

Accordingly, the inventors realized that by adjusting the degree of steering assistance with regards to the acceleration of the vehicle, the driver may experience similar steering feel even when the vehicle accelerates, despite the altered contact force between the front tyres and the ground. By including the adjustment factor when adjusting the degree of steering assistance, the electrically powered steering assist system can faster and more reliably adapt the provided degree of steering assist when the vehicle is under acceleration.

The signal indicative of the present vehicle acceleration magnitude may be the acceleration value directly or indirectly indicating the acceleration of the vehicle as provided by e.g. an inertial measurement unit, an accelerometer, calculated from speed values measured by a speedometer system of the vehicle, a global positioning system, etc. Further, the signal may likewise be provided as a revolution rate of the rear axle drive of the vehicle, preferably as a variation in the revolution rate. The revolution rate of the rear axle drive of the vehicle may be measure by e.g. an RPM gauge, i.e. generally a tachometer.

The degree of steering assistance may be provided in various forms, but is generally directly or indirectly related to the present amount of steering torque provided by the electrically powered steering assistance system to the front axle wheels of the vehicle. The adjustment factor may thus cause the electrically powered steering assistance system to adjust the amount of steering torque provided by the electrically powered steering assistance system.

Fig. 3 illustrates a flow-chart of method steps according to embodiments of the present disclosure. In addition to the steps described with reference to fig. 1, fig. 3 includes the step S105 of evaluating the present vehicle acceleration magnitude in relation to a predetermined relationship between vehicle acceleration magnitudes and adjustment factors, wherein the adjustment factor is determined based on the result of the evaluation. The adjustment factor is used in step S106 for adjusting the present degree of steering assistance.

In other words, adjustment factor may vary depending on the present vehicle acceleration magnitude and may further depend on a predetermined relationship between vehicle acceleration magnitudes and adjustment factors. The predetermined relationship may be provided as a look-up table of vehicle acceleration magnitudes versus adjustment factors, from which an adjustment factor may be selected based on a present vehicle acceleration magnitude. In other possible implementations may the predetermined relationship be provided as a model function, where the model function receives a present vehicle acceleration magnitude and calculates an adjustment factor. Generally, the predetermined relationship and the model function may be vehicle specific and depends on e.g. the design of the front and rear axles, wheel suspension, and specific vehicle chassis design that may affect the dynamics of the vehicle during acceleration or deceleration.

According to an embodiment, adjusting the present degree of steering assistance by an adjustment factor may be a scaling of the present degree of steering assistance by the adjustment factor. For example, the adjustment factor may in this case scale the degree of steering torque such that it decreases if the acceleration of the vehicle is positive. In another example, the adjustment factor may scale the degree of steering torque such that it increases if the acceleration of the vehicle is negative, i.e. during deceleration.

Accordingly, in response to the signal indicating a positive acceleration, the adjustment in the present degree of steering assistance may be a reduction in the degree of steering assistance in relation to the present degree of steering assistance.

This advantageously alleviates the effect of sensitive steering and an unstable feeling for the driver during acceleration of the vehicle.

Further, in response to the signal indicating a negative acceleration, the adjustment in the present degree of steering assistance is an increase in the degree of steering assistance in relation to the present degree of steering assistance.

In other words, during deceleration, an increase in the present degree of steering assistance provides a more comfortable and stable steering feel for the driver.

Accordingly, embodiments of the present disclosure provide for improving the performance of electrically powered steering assistance systems during both acceleration events and deceleration events.

The present vehicle acceleration is preferably a longitudinal acceleration of the vehicle.

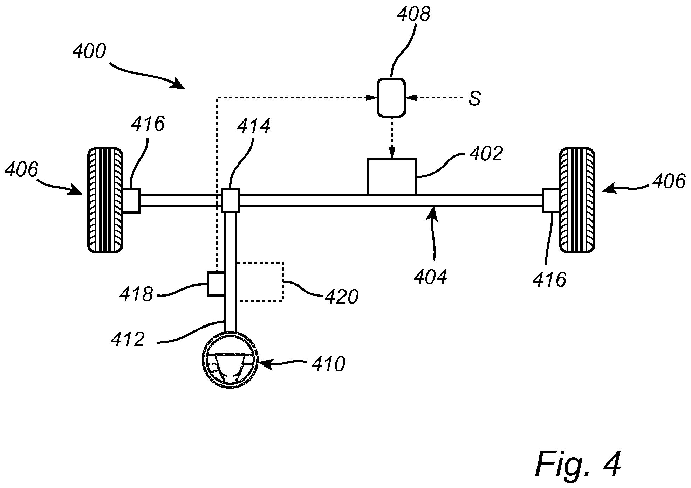

Fig. 4 illustrates an electrically powered steering assistance system according to embodiments of the present disclosure. The electrically powered steering assistance system is adapted for a front axle of a vehicle and comprises an electric motor connectable to a steering rack 404 of the front axle providing an assist steering torque to the front wheels 406. The electrically powered steering assistance system comprises a control unit 408 configured to control the electric motor 402 to provide variable degree of steering assist torque depending on a present vehicle acceleration magnitude. Thus, the control unit 408 is connected to the electric motor 402 of the electrically powered steering assistance system for providing instruction signals to the electric motor 402 for adjusting the degree of steering assistance.

Fig. 4 further illustrates a steering wheel 410 connected with a steering column 412 by means known in the art. Further, the steering column 412 is coupled to the steering rack 404 via a mechanical gear connection 414 such as the often-used rack and pinion connection. The mechanical gear connection 414 is adapted such that a rotational motion of the steering column 412 is translated to a translational motion of the steering rack 404.

The electric motor 402 may be adapted provide assisting steering torque by adding translational force to the steering rack 404 via a rack and pinion connection, or by other known means, such as belt and ball-nut connections, etc. The connection means for providing torque from the electric motor to assist in steering is considered known and will not be described further herein.

The wheels 406 are coupled to the steering rack 404 via a coupling mechanism 416 which allow for the wheels to turn in response to a translational motion of the steering rack 404. Such coupling mechanism 416 typically includes a king pin and tie rod connection although other coupling mechanisms are possible and within the scope of the present disclosure.

A torque sensor 418 is arranged to measure the torque provided to the steering column 412 via the steering wheel 410. The measured torque is thus the resulting torque needed for the driver for turning the wheel including the assisting steering torque provided by the electric motor 402.

The control unit 408 may be configured to receive a signal S indicative of a present vehicle acceleration value or a signal indicative of a variation in revolution rate of the rear axle of the vehicle. In response, the control unit 408 is configured to alter the present degree of steering assist torque depending on any one of the signals. For example, responsive to the present vehicle acceleration being a positive acceleration, the control unit 408 may be configured to control the electric motor 402 to reduce the steering assist torque by an adjustment factor based on the present vehicle acceleration.

Further, responsive to the present vehicle acceleration being a negative acceleration, the control unit 402 may be configured to control the electric motor to increase the steering assist torque by an adjustment factor based on the present vehicle acceleration.

For example, the control unit 402 may connectable to an inertial measurement unit for receiving the signal indicative of present acceleration magnitude of the vehicle as a measure of a vehicle acceleration value.

The control unit may be connectable to a drive system of the vehicle for receiving the signal indicative of the present acceleration as a measure of a variation in revolution rate of the rear axle of the vehicle. In possible implementations the control unit is connected to the drive system and the inertial measurement unit.

The electric motor 402 is here shown arranged at the steering rack 404 configured to directly apply a force to the steering rack 404. In alternative implementations may the electric motor instead be arranged at the steering column 412 to apply an assisting torque to the steering torque to provide its assisting steering torque, as conceptually represented by the electric motor 420.

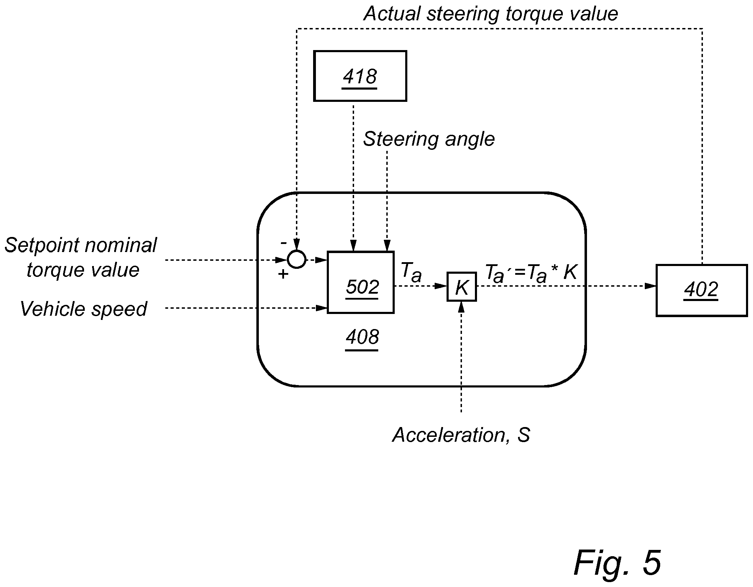

Fig. 5 conceptually illustrates a functional diagram for embodiments of the present disclosure. The control unit 408 may retrieve a setpoint nominal torque value, e.g. from memory or as a new input. The setpoint nominal torque value describes the nominal steering feel that the electrically powered steering system strives towards for the driver to experience. The setpoint nominal torque value is compared to an actual steering torque value indicating the actual, present torque from the electric motor 402. The setpoint nominal torque value is compared to an actual steering torque value in a feedback loop, whereby the result from the comparison is used in a subsequent calculation, conceptually represented by the box 502, of the assist torque *Tₐ*.

The control unit 408 receives a present vehicle speed value, the steering angle of the steering wheel from a steering angle sensor, and a steering torque value from the torque sensor 418, which may all be used in the calculation of the assist torque *Tₐ* desired from the electric motor 402 in order to match the setpoint nominal torque.

However, as the vehicle experiences acceleration, a signal S indicative of the present acceleration magnitude may be received by the control unit 408 and based on the present acceleration magnitude may an adjustment factor *K* be established. This adjustment factor is used for adjusting the assistant torque which is desirable by the electric motor 402. Thus, the assistant torque requested from the electric motor is *Tₐ'*= *K^{∗}Tₐ.*

The control unit 408 may include the appropriate feedback controllers such as a PID-controller (proportional-integral-derivative controller) for calculating the difference/error value between the setpoint nominal torque value and the actual torque value, for being able to calculate the assistant torque required in the next loop.

There is further provided a control unit arranged to control an electrically powered steering assistance system for a front axle of a vehicle, wherein the control unit is configured to: receive a signal indicative of a present vehicle acceleration; determine a present degree of steering assistance provided by the electrically powered steering assistance system to the front axle of the vehicle, and adjust the present degree of steering assistance by an adjustment factor based on the present vehicle acceleration magnitude.

In addition, there is provided a computer program product comprising a computer readable medium having stored thereon computer program means for controlling electrically powered steering assistance system for a front axle of a vehicle, wherein the computer program product comprises: code for evaluating a present degree of steering assistance provided by the electrically powered steering assistance system in relation to a present vehicle acceleration magnitude, code for adjusting the present degree of steering assistance by an adjustment factor based on the present vehicle acceleration magnitude.

In embodiment, the the computer program product may comprise code for evaluating the present vehicle acceleration magnitude in relation to a predetermined relationship between vehicle acceleration magnitudes and adjustment factors, and code for determining an adjustment factor based on the result of the evaluation.

The communication between the control unit and other devices, systems, or components may be hardwired or may use other known electrical connection techniques, or wireless networks, known in the art such as via CAN-buses, Bluetooth, Wifi, Ethernet, 3G, 4G, 5G, etc.

A control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities.

A control unit of the present disclosure is generally known as an ECU, electronic control unit.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), complex programmable logic devices (CPLDs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A method for controlling an electrically powered steering assistance system for a front axle of a vehicle, the method comprising:
receiving a signal indicative of a present vehicle acceleration magnitude;
determining a present degree of steering assistance provided by the electrically powered steering assistance system to the front axle of the vehicle, and
adjusting the present degree of steering assistance by an adjustment factor based on the present vehicle acceleration magnitude.

2. The method according to claim 1, comprising:
evaluating the present vehicle acceleration magnitude in relation to a predetermined relationship between vehicle acceleration magnitudes and adjustment factors, wherein the adjustment factor is determined based on the result of the evaluation.

3. The method according to any one of claims 1 and 2, wherein adjusting the present degree of steering assistance by an adjustment factor is a scaling of the present degree of steering assistance by the adjustment factor.

4. The method according to any one of the preceding claims, wherein, in response to the signal indicating a positive acceleration, the adjustment in the present degree of steering assistance is a reduction in the degree of steering assistance in relation to the present degree of steering assistance.

5. The method according to any one of the preceding claims, wherein, in response to the signal indicating a negative acceleration, the adjustment in the present degree of steering assistance is an increase in the degree of steering assistance in relation to the present degree of steering assistance.

6. The method according to any one of the preceding claims, wherein the signal indicative of the present vehicle acceleration magnitude indicates a measure of the vehicle acceleration.

7. The method according to any one of the preceding claims, wherein the signal indicative of the present vehicle acceleration magnitude indicates a measure of a variation in revolution rate of the rear axle of the vehicle.

8. The method according to any one of the preceding claims, wherein the present degree of steering assistance is a present amount of steering torque provided by the electrically powered steering assistance system to the front axle wheels of the vehicle.

9. The method according to any one of the preceding claims, wherein the vehicle acceleration is a longitudinal acceleration of the vehicle.

10. An electrically powered steering assistance system for a front axle of a vehicle, the system comprising:
an electric motor connectable to a steering rack of a front axle of a vehicle for providing an assist steering torque to front wheels of the front axle, and
a control unit configured to control the electric motor to provide variable degree of steering assist torque depending on a present vehicle acceleration magnitude.

11. The electrically powered steering assistance system according to claim 10, wherein the control unit is configured to receive a signal indicative of a present vehicle acceleration value or a signal indicative of a variation in revolution rate of the rear axle of the vehicle, wherein the control unit is configured to alter the present degree of steering assist torque depending on any one of the signals.

12. The electrically powered steering assistance system according to any one of claims 10 and 11,
wherein, responsive to the present vehicle acceleration being a positive acceleration, the control unit is configured to control the electric motor to reduce the steering assist torque by an adjustment factor based on the present vehicle acceleration magnitude, and/or
wherein, responsive to the present vehicle acceleration being a negative acceleration, the control unit is configured to control the electric motor to increase the steering assist torque by an adjustment factor based on the present vehicle acceleration magnitude.

13. A vehicle comprising a system according to any one of claims 10 to 12.

14. A control unit arranged to control an electrically powered steering assistance system for a front axle of a vehicle, wherein the control unit is configured to:
receive a signal indicative of a present vehicle acceleration magnitude;
determine a present degree of steering assistance provided by the electrically powered steering assistance system to the front axle of the vehicle, and
adjust the present degree of steering assistance by an adjustment factor based on the present vehicle acceleration magnitude.

15. A computer program product comprising a computer readable medium having stored thereon computer program means for controlling electrically powered steering assistance system for a front axle of a vehicle, wherein the computer program product comprises:
code for evaluating a present degree of steering assistance provided by the electrically powered steering assistance system in relation to a present vehicle acceleration magnitude, and
code for adjusting the present degree of steering assistance by an adjustment factor based on the present vehicle acceleration magnitude.
